# EUROPEAN PATENT SPECIFICATION

(11) **EP 1 451 012 B1**
(45) Date of publication and mention of the grant of the patent: **23.08.2006**
(21) Application number: 02783935.6
(22) Date of filing: 07.11.2002
(51) Int. Cl.: B32B 27/32, B65D 85/78

(54) **PACKAGING LAMINATE AND PACKAGING CONTAINER**
VERPACKUNGSLAMINAT UND VERPACKUNGSBEHÄLTER
STRATIFIE ET RECIPIENT D'EMBALLAGE

(30) Priority: 09.11.2001 SE 0103627
(43) Date of publication of application: 01.09.2004
(73) Proprietor: Tetra Laval Holdings & Finance S.A., 1009 Pully (CH)
(72) Inventor: LENNARTSSON, Mattias, S-223 61 Lund (SE)
(74) Representative: Sundell, Hakan Oskar Anders
(86) International application number: PCT/SE2002/002035
(87) International publication number: WO 2003/039865

(56) References cited:
- EP-A2- 0 259 976
- FR-A1- 2 741 603
- JP-A- 7 137 730
- JP-A- 9 267 819
- JP-A- 11 216 811
- JP-A- 2001 158 480

## Description

### TECHNICAL FIELD

The present invention relates to a packaging laminate for a packaging container for a food product which is intended to be frozen, comprising a core layer and outer, liquid-tight layers. The present invention also relates to the packaging container which is formed from the packaging laminate. The present invention has primarily been developed to be utilised for the packing of a food product which is substantially liquiform in the unfrozen state, but is substantially solid in the frozen state, the food product preferably consisting of water ice or sherbet.

### BACKGROUND ART AND PROBLEMS

For packaging containers intended for food products which are stored and transported in substantially liquid state, there is generally a problem in providing the packaging container with an opening arrangement which, on the one hand, withstands rough handling during storage and transport without beginning to leak and, on the other hand, is easy to open for the end user, preferably without the need for utensils in the form, for example, of a pair of scissors. Moreover, the opening arrangement should satisfy a number of criteria related to manufacture, such as low cost, few manufacturing steps and few machine components required in the manufacturing process.

One of the simplest, and thereby most economical opening arrangements consists of a perforation. This is the opening arrangement which has hitherto been utilised in a classic tetrahedral shaped portion package of the type which carries the registered trademark Tetra Classic®, when this package contains water ice or sherbet. The tetrahedral shaped package tapers cuneiformly towards a seal of the "praying" type, i.e. a seal in which the outer sealing layer of the packaging laminate (facing towards the product) directly abuts against and is sealed against itself in such a manner that the free edges of the packaging laminate face out in a "fin" from the package like two hands joined in prayer. Inside the seal, seen in a direction from the projecting "fin", this package displays a perforation on both sides of the package, the perforation being as long, or almost as long, as the seal.

This package, for water ice or sherbet, can be stored and transported with its contents in the unfrozen state, but only opened and consumed once it and its contents have been frozen. The package type is excellent for this purpose, but one problem resides in that the packaging material, on transport and storage, tends to fold in the perforation immediately inside the seal, there then being a risk of leakage, in particular in the edges of the fin at the fold-over of the laminate. Attempts to solve this problem have been made in that the perforation has not been permitted to extend right out into the ends/edges of the fin - which has, however, resulted in the package becoming extremely difficult to open without some form of utensil.

### OUTLINE OF THE INVENTION

The present invention has for its object to disclose a packaging laminate for a packaging container for a food product which is intended to be frozen, the packaging laminate and packaging container obviating or at least reducing the above-described problems.

The present invention particularly has for its object to disclose a packaging laminate and a packaging container for a food product which is intended to be frozen, the packaging laminate and the packaging container respectively making for and displaying a seal and/or opening arrangement which is strong and durable when the food product is "weak", i.e. unfrozen, and which is weak and easily opened when the food product is "strong", i.e. frozen and consequently hard.

The present invention further has for its object specifically to disclose a packaging container for a food product which is intended to be frozen, the packaging container being capable of being opened in the frozen state without the employment of utensils, preferably direct in the seal without perforation.

These and other objects will be attained according to the present invention by means of a packaging laminate as disclosed in appended Claim 1, as well as a packaging container as disclosed in appended Claim 12.

The principle according to the present invention is thus based on the concept that the packaging laminate, and thereby the packaging container, is provided with an outer thermosealable layer which, at least in selected part regions thereof, displays a brittle point between -25°C and +20°C. These possible part regions constitute the part regions where seals are provided or are to be disposed, but it is naturally also conceivable, and often most preferable, that all or substantially all of the one surface of the packaging laminate is provided with the above-mentioned outer thermosealable layer which displays a brittle point between -25°C and +20°C.

It is preferred that this brittle point is lowest -20°C, preferably lowest -15°C, and even more preferably lowest -10°C, but highest +17°C, preferably highest +15°C and even more preferably highest +12°C.

However, in cold storage and/or transport, it is appropriate that this brittle point be lowest -20°C, preferably lowest -15°C, and even more preferably lowest - 10°C, but highest +8°C, preferably highest +4°C and even more preferably +2°C.

Thanks to the material selection in this outer, thermosealable layer which faces towards the interior of the packaging container, there can be realised a seal which is tough and strong and thereby withstands stresses when the temperature lies above the brittle point, as in transport and storage at around room temperature in the unfrozen state. At a temperature below the brittle point, as when the packaging container with its contents of water ice or the like has recently been removed from a freezer, the seal is thereby brittle, weak and consequently easy to open without utensils and, in the preferred case, even without perforation or other specifically provided opening arrangement. In this preferred case, a sharp edge of the frozen, cuneiform food product is quite simply pushed straight through the seal which is weak because of the low temperature and ruptures it.

One advantage in this context is also that the packaging container is not normally exposed to loading or stresses on storage when it is in the frozen state, i.e. when the seal is weak, and even if it were to be exposed to loading stresses, these would - because of the frozen and hard contents - not be concentrated to the seal in the same manner as when the contents are in liquid form.

In addition to the fact that the packaging container will be easy to open in the frozen state (in particular for children), other advantages reside in the fact that the packaging container is leak-proof on transport and storage in the unfrozen state. Moreover, no loose parts are formed when the packaging container is opened, which otherwise become litter and are often not recycled. Further, the preferred case does not call for the employment of machine equipment for realising perforation, which also reduces the number of manufacturing steps and hence costs.

### DETAILED ACCOUNT OF THE INVENTION AND BRIEF DESCRIPTION OF THE ACCOMPANYING DRAWINGS

The present invention will now be described in greater detail hereinbelow, with reference to the accompanying Drawings, in which:
Fig. 1 shows one preferred packaging laminate according to the present invention, seen in cross section; and
Fig. 2 shows one preferred packaging container according to the present invention, seen in perspective.

### DESCRIPTION OF PREFERRED EMBODIMENTS

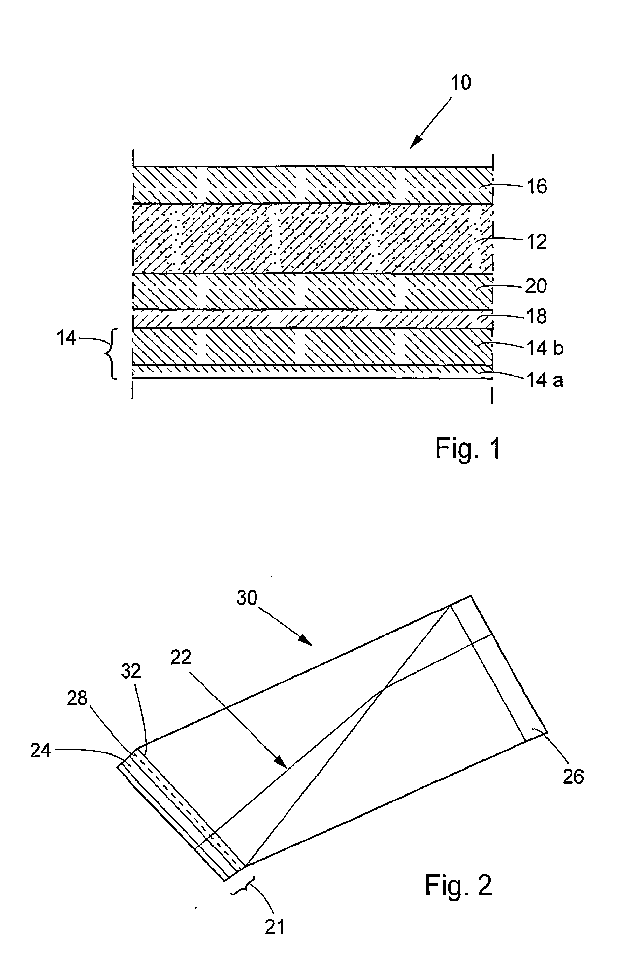

Fig. 1 shows a preferred packaging laminate 10 according to the present invention. This comprises a core layer 12 of a polymer material or rather of paper or paperboard. The core layer 12 is the individually thickest layer in the laminate 10 and also the layer which makes the greatest contribution to the mechanical properties of the laminate, such as flexural rigidity etc. On the one outer side of the laminate 10, the side being intended to face in towards the interior of the package and thereby towards the food product, there is disposed a thermosealable layer 14 according to the present invention, which at least in selected part regions thereof, displays a brittle point between -25°C and +20°C. The layer 14 suitably has a layer thickness of 2 - 50 µm.

On the opposite side of this outer thermosealable layer 14, the laminate displays a second outer thermosealable layer 16 which preferably consists of polyethylene or of a thermosealable layer which at least in selected part regions thereof, displays a brittle point between -25°C and +20°C.

The two layers 14 and 16 also impart liquid-tightness to the packaging laminate 10.

Between the outer, thermosealable layer 14 and the core layer 12 according to the present invention, there is disposed a thin barrier layer 18, preferably a gas barrier layer, and even more preferably an oxygen gas barrier layer. In the illustrated case, the barrier layer consists of an aluminium foil (Alifoil).

Between the core layer 12 and the barrier layer 18, use is suitably made of an interjacent polymer lamination layer, glue or other adhesive 20. In the illustrated embodiment, this lamination layer 20 consists of polyethylene or of a polymer material which displays a brittle point between -25°C and +20°C.

From the practical viewpoint relating to production engineering, it may be preferred that all polymer layers in the laminate consist of the same type of material with a brittle point between -25°C and +20°C as the outer, thermosealable layer 14 according to the present invention. On the other hand, from the economical point of view, it may be preferred that only an outermost layer 14a of the outer, thermosealable layer 14 consists of a material with a brittle point between -25°C and +20°C. In such an event, this outermost layer 14a suitably displays a material thickness of 2-15 µm, preferably 2-10 µm, and is preferably disposed together with an inner thermosealable layer 14b which also constitutes part of the outer thermosealable layer 14. This inner thermosealable layer 14b is preferably formed from polyethylene. The two thermosealable layers 14a and 14b have most preferably been provided by co-extrusion and together display a layer thickness of 15-50 µm, preferably 5-45 µm.

It may also be the case that the outer, thermosealable layer 14 according to the present invention include at least two preferably co-extruded part layers 14a, 14b, which are formed from the same material and, at least in selected part regions, display the above-mentioned brittle point according to the invention. Also in this case, the part layer 14a displays a layer thickness of 2-15 µm, preferably 2-10 µm, while the layers 14a and 14b together display a layer thickness of 15-50 µm, preferably 25-45 µm.

Regardless of whether the thermosealable layer 14 according to the present invention consists of a thin outer layer 14a of the type according to the invention provided together with an inner thermosealable layer 14b of conventional type, or whether it consists of one layer 14 or at least two layers 14a, 14b of the type according to the present invention, the brittleness is created at low temperature in that the layer/layers 14a; 14; 14a, 14b of the type according to the present invention include a polymer material which displays this brittle point. According to one aspect of the present invention, this polymer material includes at least one brittle point-lowering polymer, which preferably consists of a polyolefin and most preferably of polypropylene. It is preferred that this polymer material also include polyethylene, the polyethylene and brittle point-lowering polymer ideally existing in a mechanical or physical mixture, most preferably as copolymer. Suitably, the above-mentioned brittle point-lowering polymer is present in a quantity of up to 40 weight %, preferably 1-30 weight %, and even more preferably at least 10 weight % in the above-mentioned polymer material.

According to another aspect of the present invention, the above-mentioned polymer material consists of a polymer material which, after treatment, for example heating (possibly in the form of zone heating), is caused to permanently display the above-mentioned brittle point.

Fig. 2 shows one preferred aseptic packaging container 30 according to the invention. This typically displays a volume of at most 200 ml, at least in the case when it is intended for water ice or sherbet and is tetrahedral in shape. Packaging containers of this type are produced such that a web of the packaging laminate is first reformed into a tube by both longitudinal edges of the web being united to one another in a liquid-tight overlap joint 22 with the sealing layer 14 placed on that side of the core layer which is turned to face inwards in the tube. The tube is aseptically filled with the contemplated contents, e.g. water ice or sherbet in the unfrozen state, and is divided by repeated transverse thermal seals 24, 26 alternatingly 90° transversely in relation to one another, into individual tetrahedral packaging units 30 which are separated from one another by incisions in the transverse sealing zones. The transverse sealing zones 24, 26 will thereby be of the "praying" type, the free edges of the fin 21 facing out from the packaging container. At the same time, the packaging container tapers cuneiformly towards these transverse seals 24, 26, with the result that a frozen food product within the packaging container 30 will display a sharp edge which can be pushed through the seal 24 when the package is to be opened. The seal 24 in the opening end of the package preferably displays an active sealing width of 0.3-5 mm, preferably 0.5-3.5 mm. Possibly blocked sealing, i.e. incompletely fused sealing, outside the active sealing width is not counted in the active sealing width.

In the fin 21, there may be provided, immediately inside the seal 24, according to a non-preferred embodiment of the present invention, a perforation 28 which is as long as the seal 24 or possibly somewhat shorter (in which event the perforation is possibly absent at the edges of the fin 21, i.e. the folded-over short ends of the packaging laminate). Also in this case, i.e. the case when the perforation 28 is provided, opening is facilitated by the brittle point of the polymer material. In this case, it is preferred that all polymer layers in the packaging laminate consist of layers having a brittle point according to the present invention. In the embodiment where the material for the outer, thermosealable layer 14 consists of a polymer material which, after treatment, is caused to permanently display the above-mentioned brittle point, this treatment, for example in the form of zone heating, is suitably put into effect only in the region of the perforation 28, in other words suitably not at the thermoseal 24, 26 proper.

At the inner longitudinal edge of the fin 21, there may be provided a crease line 32 immediately inside the perforation 28 and whose purpose is to constitute a fold indication which prevents the packaging laminate from being folded in the perforation 28 during transport and storage.

On the inside of the longitudinal joint 22, the packaging container may be provided with a sealing strip (not shown) which is preferably formed from the same material as the outer, thermosealable layer 14. This sealing strip has for its purpose to protect the free, cut edges of the packaging laminate against moisture and liquid.

The present invention is not restricted to the above-described embodiments, but may be varied without departing from the scope of the appended Claims. For example, it should be perceived that when polyethylene is mentioned, this polyethylene may consist of any polyethylene whatever suitable to the purpose, which may, for example be polymerised using so-called free radical technology: low density polyethylene (LDPE); or using catalyst technology: high density polyethylene (HDPE), medium density polyethylene (MDPE), linear low density polyethylene (LLDPE), very low density polyethylene (VLDPE), ultralow density polyethylene (ULDPE), or metallocene/single site catalyst PE (mPE). It should also be perceived that the present invention may also be utilised in connection with packaging containers of other configuration than that shown here, and with other types of opening arrangements which are based on the concept that a seal or a sealing layer is to be ruptured.

## Claims

1. A packaging laminate (10) for a packaging container for a food product intended to be frozen, comprising a core layer (12) and outer, liquid-tight layers (14, 16), **characterised in that** the packaging laminate (10) displays an outer, thermosealable layer (14; 14a) which, at least in selected part regions thereof, displays a brittle point between -25°C and +20°C.

2. The packaging laminate as claimed in Claim 1, **characterised in that** said brittle point is lowest -20°C, preferably lowest -15°C, and even more preferably lowest -10°C, but highest +17°C, preferably highest +15°C and even more preferably highest +12°C.

3. The packaging laminate as claimed in Claim 1, **characterised in that** said brittle point is lowest -20°C, preferably lowest -15°C, and even more preferably lowest -10°C, but highest +8°C, preferably highest +4°C and even more preferably highest +2°C

4. The packaging laminate as claimed in any of the preceding Claims, **characterised in that** said outer, thermosealable layer (14; 14a) includes a polymer material which displays said brittle point, the polymer material including at least one brittle point-lowering polymer which preferably consists of at least one polyolefin and most preferably of polypropylene, and preferably also includes polyethylene, said polyethylene and said brittle point-lowering polymer preferably being present as a physical or mechanical mixture and even more preferably as a copolymer.

5. The packaging laminate as claimed in Claim 4, **characterised in that** said brittle point-lowering polymer is present in a quantity of up to 40 weight %, preferably 1-30 weight % and even more preferably at least 10 weight % in said polymer material.

6. The packaging laminate as claimed in any of the preceding Claims, **characterised in that** said outer, thermosealable layer (14; 14a) displays a layer thickness of 2-50 µm.

7. The packaging laminate as claimed in Claim 6, **characterised in that** said outer, thermosealable layer (14a) displays a layer thickness of 2-15 µm, preferably 2-10 µm, it preferably being provided together with an inner, thermosealable layer (14b), preferably by coextrusion.

8. The packaging laminate as claimed in Claim 1, **characterised in that** said outer, thermosealable layer (14) displays a layer thickness of 15-50 µm, preferably 25-40 µm, it including at least two, preferably coextruded part layers (14a, 14b) which, at least in said selected part regions thereof, displays said brittle point.

9. The packaging laminate as claimed in any of the preceding Claims, **characterised in that** said core layer (12) consists of polymer material, paper or paperboard, and that a barrier layer (18) is disposed between the core layer (12) and the one outer, liquid-tight layer, the barrier layer preferably consisting of aluminium.

10. The packaging laminate as claimed in any of the preceding Claims, **characterised in that** on its opposite side to said outer, thermosealable layer (14; 14a), it displays a second outer, thermosealable layer (16) which consists of polyethylene or of a thermosealable layer which at least in selected part regions thereof displays said brittle point.

11. The packaging laminate as claimed in any of the preceding Claims, **characterised in that** all polymer layers (14, 16, 20) included in the packaging laminate, at least in selected part regions thereof, display said brittle point.

12. A packaging container (30) for a food product intended to be frozen, **characterised in that** it is formed from a packaging laminate (10) as claimed in any of the preceding Claims.

13. The packaging container as claimed in Claim 12, **characterised in that** said food product is substantially liquiform in the unfrozen state, but substantially solid in the frozen state, said liquid product preferably consisting of water ice or sherbet.

14. The packaging container as claimed in Claim 12 or 13, **characterised in that** it displays a seal (24) in which said outer, thermosealable layer (14; 14a) directly abuts and is sealed to itself in a so-called praying seal.

15. The packaging container as claimed in Claim 14, **characterised in that** said seal (24) displays an active sealing width of 0.3-5 mm, preferably 0.5-3.5 mm.

16. The packaging container as claimed in Claim 14 or 15, **characterised in that** it tapers cuneiformly towards said seal (24), it preferably being tetrahedral in configuration.

## Patentansprüche

1. Verpackungslaminat (10) für einen Verpackungsbehälter für ein Nahrungsmittelerzeugnis, das eingefroren werden soll, welches eine Kernschicht (12) und äußere, flüssigkeitsdichte Schichten (14, 16) umfasst, **dadurch gekennzeichnet, dass** das Verpackungslaminat (10) eine äußere, heißverschweißbare Schicht (14; 14a) aufweist, die wenigstens in ausgewählten Bereichen davon einen Sprödigkeitspunkt zwischen -25°C und +20°C hat.

2. Verpackungslaminat nach Anspruch 1, **dadurch gekennzeichnet, dass** der Sprödigkeitspunkt am niedrigsten bei -20°C, bevorzugt am niedrigsten bei -15°C und stärker bevorzugt am niedrigsten bei -10°C, am höchsten jedoch bei +17°C, bevorzugt am höchsten bei +15°C und stärker bevorzugt am höchsten bei +12°C liegt.

3. Verpackungslaminat nach Anspruch 1, **dadurch gekennzeichnet, dass** der Sprödigkeitspunkt am niedrigsten bei -20°C, bevorzugt am niedrigsten bei -15°C und stärker bevorzugt am niedrigsten bei -10°C, am höchsten jedoch bei +8°C, bevorzugt am höchsten bei +4°C und stärker bevorzugt am höchsten bei +2°C liegt.

4. Verpackungslaminat nach einem der vorhergehenden Ansprüche, **dadurch gekennzeichnet, dass** die äußere heißverschweißbare Schicht (14; 14a) ein polymeres Material umfasst, das den genannten Sprödigkeitspunkt aufweist, wobei das polymere Material wenigstens ein den Sprödigkeitspunkt senkendes Polymer umfasst, das bevorzugt wenigstens aus einem Polyolefin und am stärksten bevorzugt aus Polypropylen besteht und das bevorzugt weiterhin Polyethylen umfasst, wobei das Polyethylen und das den Sprödigkeitspunkt senkende Polymer bevorzugt als ein physisches oder mechanisches Gemisch und stärker bevorzugt als ein Copolymer vorliegen.

5. Verpackungslaminat nach Anspruch 4, **dadurch gekennzeichnet, dass** das den Sprödigkeitspunkt senkende Polymer in einer Menge von bis zu 40 Gew.-%, bevorzugt von 1 Gew.-% bis zu 30 Gew.-% und stärker bevorzugt von wenigstens 10 Gew.-%, in dem polymeren Material vorliegt.

6. Verpackungslaminat nach einem der vorhergehenden Ansprüche, **dadurch gekennzeichnet, dass** die äußere heißverschweißbare Schicht (14; 14a) eine Schichtdicke von 2 µm bis zu 50 µm aufweist.

7. Verpackungslaminat nach Anspruch 6, **dadurch gekennzeichnet, dass** die äußere heißverschweißbare Schicht (14a) eine Schichtdicke von 2 µm bis zu 15 µm, bevorzugt von 2 µm bis zu 10 µm, aufweist, wobei sie bevorzugt durch Koextrusion mit einer inneren heißverschweißbaren Schicht (14b) bereitgestellt ist.

8. Verpackungslaminat nach Anspruch 1, **dadurch gekennzeichnet, dass** die äußere heißverschweißbare Schicht (14) eine Schichtdicke von 15 µm bis zu 50 µm, bevorzugt von 25 µm bis zu 40 µm, aufweist, wobei sie wenigstens zwei, bevorzugt koextrudierte, Teilschichten (14a, 14b) enthält, die wenigstens in ausgewählten Bereichen davon den genannten Sprödigkeitspunkt aufweisen.

9. Verpackungslaminat nach einem der vorhergehenden Ansprüche, **dadurch gekennzeichnet, dass** die Kernschicht (12) aus polymerem Material, Papier oder Pappe besteht und dass eine Sperrschicht (18) zwischen der Kernschicht (12) und der einen äußeren, flüssigkeitsdichten Schicht angeordnet ist, wobei die Sperrschicht bevorzugt aus Aluminium besteht.

10. Verpackungslaminat nach einem der vorhergehenden Ansprüche, **dadurch gekennzeichnet, dass** es auf seiner der äußeren, heißverschweißbaren Schicht (14; 14a) gegenüberliegenden Seite eine zweite äußere, heißverschweißbare Schicht (16) aufweist, die aus Polyethylen oder aus einer heißverschweißbaren Schicht, die den genannten Sprödigkeitspunkt wenigstens in ausgewählten Teilbereichen derselben aufweist, besteht.

11. Verpackungslaminat nach einem der vorhergehenden Ansprüche, **dadurch gekennzeichnet, dass** alle in dem Verpackungslaminat enthaltenen polymeren Schichten (14, 16, 20) wenigstens in ausgewählten Teilbereichen davon den genannten Sprödigkeitspunkt aufweisen.

12. Verpackungsbehälter (30) für ein Nahrungsmittelerzeugnis, das eingefroren werden soll, **dadurch gekennzeichnet, dass** es aus einem Verpackungslaminat (10) nach einem der vorhergehenden Ansprüche ausgebildet wird.

13. Verpackungsbehälter nach Anspruch 12, **dadurch gekennzeichnet, dass** das Nahrungsmittelerzeugnis im nicht gefrorenen Zustand im Wesentlichen in flüssiger Form vorliegt, dass es im gefrorenen Zustand jedoch in fester Form vorliegt, wobei das flüssige Erzeugnis bevorzugt aus Wassereis oder aus Sorbet besteht.

14. Verpackungsbehälter nach Anspruch 12 oder 13, **dadurch gekennzeichnet, dass** er eine Verschweißung (24) aufweist, in die die äußere, heißverschweißbare Schicht (14; 14a) direkt in einer sogenannten betenden Verschweißung angrenzt und mit sich selbst versiegelt wird.

15. Verpackungsbehälter nach Anspruch 14, **dadurch gekennzeichnet, dass** die Verschweißung (24) eine aktive Verschweißungsbreite von 0,3 mm bis zu 5 mm, bevorzugt von 0,5 mm bis zu 3,5 mm, aufweist.

16. Verpackungsbehälter nach Anspruch 14 oder 15, **dadurch gekennzeichnet, dass** er sich keilförmig zu der Verschweißung (24) hin verjüngt, wobei er bevorzugt von tetraedrischer Form ist.

## Revendications

1. Stratifié d'emballage (10) pour un récipient d'emballage de produit alimentaire prévu pour être congelé, comprenant une couche d'âme (12) et des couches extérieures étanches aux liquides (14, 16), **caractérisé en ce que** le stratifié d'emballage (10) comporte une couche thermosoudable extérieure (14 ; 14a) qui présente, au moins dans des régions choisies, un point de fragilité compris entre -25°C et +20°C.

2. Stratifié d'emballage selon la revendication 1, **caractérisé en ce que** le dit point de fragilité est inférieur à -20°C, de préférence inférieur à -15°C et encore plus avantageusement inférieur à -10°C, mais supérieur à +17°C, de préférence supérieur à +15°C et encore plus avantageusement supérieur à +12°C.

3. Stratifié d'emballage selon la revendication 1, **caractérisé en ce que** le dit point de fragilité est inférieur à -20°C, de préférence inférieur à -15°C et encore plus avantageusement inférieur à -10°C, mais supérieur à +8°C, de préférence supérieur à +4°C et encore plus avantageusement supérieur à +2°C.

4. Stratifié d'emballage selon une quelconque des revendications précédentes, **caractérisé en ce que** la dite couche thermosoudable extérieure (14, 14a) comprend une matière polymère qui présente le dit point de fragilité, la matière polymère incluant au moins un polymère d'abaissement du point de fragilité qui consiste de préférence en au moins une polyoléfine et plus avantageusement du polypropylène, et contient également de préférence du polyéthylène, le dit polyéthylène et le dit polymère d'abaissement de point de fragilité étant de préférence présents sous forme d'un mélange physique ou mécanique et même plus avantageusement sous forme d'un copolymère.

5. Stratifié d'emballage selon la revendication 4, **caractérisé en ce que** le dit polymère d'abaissement de point de fragilité est présent en une quantité pouvant atteindre 40% en poids, de préférence 1 à 30% en poids et encore plus avantageusement au moins 10% en poids dans la dite matière polymère.

6. Stratifié d'emballage selon une quelconque des revendications précédentes, **caractérisé en ce que** la dite couche thermosoudable extérieure (14, 14a) présente une épaisseur de couche de 2 à 50 µm.

7. Stratifié d'emballage selon la revendication 6, **caractérisé en ce que** la dite couche thermosoudable extérieure (14a) présente une épaisseur de couche de 2 à 15 µm, de préférence de 2 à 10 µm, cette couche étant de préférence associée à une couche thermosoudable intérieure (14b), de préférence par coextrusion.

8. Stratifié d'emballage selon la revendication 1, **caractérisé en ce que** la dite couche thermosoudable extérieure (14) présente une épaisseur de couche de 15 à 50 µm, de préférence 25 à 40 µm, et elle inclut au moins deux couches de préférence coextrudées (14a, 14b) qui présentent le dit point de fragilité au moins dans leurs dites régions choisies.

9. Stratifié d'emballage selon une quelconque des revendications précédentes, **caractérisé en ce que** la dite couche d'âme (12) consiste en une matière polymère, papier ou carton, et **en ce qu'**une couche de barrière (18) est disposée entre la couche d'âme (12) et la couche extérieure étanche aux liquides, la couche de barrière étant de préférence à base d'aluminium.

10. Stratifié d'emballage selon une quelconque des revendications précédentes, **caractérisé en ce que**, sur son côté opposé à la dite couche thermosoudable extérieure (14 ; 14a), il présente une deuxième couche thermosoudable extérieure (16) qui est constituée de polyéthylène ou d'une couche thermosoudable qui présente le dit point de fragilité au moins dans des régions choisies.

11. Stratifié d'emballage selon une quelconque des revendications précédentes, **caractérisé en ce que** toutes les couches de polymère (14, 16, 20) incluses dans le stratifié d'emballage, au moins dans des régions choisies, présentent le dit point de fragilité.

12. Récipient d'emballage (30) pour un produit alimentaire prévu pour être congelé, **caractérisé en ce qu'**il est formé à partir d'un stratifié d'emballage '10) selon une quelconque des revendications précédentes.

13. Récipient d'emballage selon la revendication 12, **caractérisé en ce que** le dit produit alimentaire est sensiblement sous forme liquide à l'état non congelé, mais sensiblement solide à l'état congelé, le dit produit liquide étant de préférence de la glace à l'eau ou un sorbet.

14. Récipient d'emballage selon la revendication 12 ou 13, **caractérisé en ce qu'**il comporte une fermeture (24) dans laquelle la dite couche thermosoudable extérieure (14 ; 14a) est directement en butée et est soudée à elle-même en une fermeture dite en prière.

15. Récipient d'emballage selon la revendication 14, **caractérisé en ce que** la dite fermeture (24) possède une largeur de fermeture active de 0,3 à 5 mm et de préférence 0,5 à 3,5 mm.

16. Récipient d'emballage selon la revendication 14 ou 15, **caractérisé en ce qu'**il converge en forme de coin vers la dite fermeture (24) et il a de préférence une configuration tétraédrique.
